(19)

Europäisches
Patentamt

European
Patent Office

Office européen
des brevets

(11) **EP 3 389 280 A1**

(12) **EUROPEAN PATENT APPLICATION**

(43) Date of publication:
**17.10.2018 Bulletin 2018/42**

(51) Int Cl.:
**H04N 21/647** (2011.01)    **H04L 9/32** (2006.01)
**H04N 21/835** (2011.01)

(21) Application number: **17166445.1**

(22) Date of filing: **13.04.2017**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **eTuitus S.R.L.**
**84084 Fisciano (SA) (IT)**

(72) Inventors:
• **CATTANEO, Giuseppe**
**84084 FISCIANO (SA) (IT)**
• **DE SANTIS, Alfredo**
**84084 FISCIANO (SA) (IT)**

(74) Representative: **Santi, Filippo et al**
**Barzanò & Zanardo Roma S.p.A.**
**Via Piemonte 26**
**00187 Roma (IT)**

(54) **METHOD FOR REAL-TIME CERTIFYING THE INTEGRITY OF A SEQUENCE OF VIDEO AND/OR AUDIO FRAMES**

(57) The present invention relates to a method and a system that allow to associate an integrity value to each datum of a data sequence, audio and/or video, at the very moment of its production. The data sequence is then provided to a user who can verify that it has not been altered in the meantime by performing the same method and the by comparing calculated authentication values with the delivered one.

Fig. 1

**Description**

The present invention relates to a method and system for checking the integrity of real-time audio and/or video data sequences.

More precisely, the present invention relates to a method and a system that allows to associate an integrity value to each datum of a data sequence, audio and/or video, at the very moment of its production. The data sequence is then provided to a user who can verify that it has not been altered in the meantime by performing the same method and the by comparing calculated authentication values with the delivered one.

State of the art

When a movie is produced, there is the problem of defending it against manipulations which may alter its content and then its originality. In a more general sense, the digital movie should be defended from the moment of its production, so one can say with certainty whether the original content of the sequence has undergone any type of manipulation after being produced. By way of example, given a digital camera that produces 20 video frames per second, there is the problem of finding an instrument capable of real-time prevention (immediately, together with the single frame production) of any change to the product film (from the first frame to the last one generated).

Changing the movie means one of the three following actions:

1. Alteration of one or more frames (modification of the content of even a single bit),
2. Deleting frames from the sequence,
3. Inclusion, in the sequence, of frames that are not part of it, or produced in another order.

It is clear that, in the case of the elimination of frame, nothing could be perceived by the human senses as the absence of one or more frames cannot be perceived. Similarly, small content changes (such as the elimination of an owner logo or a digital watermark) do not produce visible effects except for those who know exactly the original content.

There are no known solutions to the described problem.

One possible immediate solution could only be achieved by saving the stream into a file and then signing the file content digitally. This implies that only at the end of the sequence the unique footprint for the entire flow can be calculated. A similar approach is substantially different, in that it does not guarantee that when saving the flow, it is not altered. In addition, if for example the flow is related to a movie lasting 2 hours, the data integrity check will be available only after two hours. In this time span, all frames already produced could be subject to manipulation and modification before they are saved.

In addition to the video stream, the problem arises for any data stream. The data streams are in fact used more often (in technical terms, this is called a stream) to transmit audio or video content over computer networks. The problem then arises for example in the field of Digital Forensics in the case of examination of scientific evidence produced by video surveillance cameras up to the field of protection of copyrights related to movies and music.

In the field of Digital Forensics, segments of films produced by cameras for video surveillance are used always with greater frequency as scientific evidence, and therefore it is crucial to establish with certainty their integrity/reliability both at the stage of the investigation and in the successive pleadings stages.

Other examples of blatant counterfeiting of digital images are represented by the satellite images used to witness the presence of chemical weapons in the Middle East regions. Only at the end of the Gulf War, it was determined that the images had been altered and thus the deposits of weapons did not exist.

It is an object of the present invention to provide a method and a system that solve the problems and overcome the drawbacks of prior art.

It is subject-matter of the present invention a method and a system according to the annexed claims, which form an integral part of the present description.

The invention will now be described for illustrative but not limitative purposes, with particular reference to the figures of the accompanying drawings, in which:

• Figure 1 shows an exemplary flow chart of the method according to the invention;

• Figure 2 shows an example of a system which realizes the Figure 1 flow chart.

Detailed description of examples of the invention

In order to introduce the necessary terminology, before the technical description, the main definitions and concepts used in the subsequent description of the invention will be introduced.

| Concept | Definition |
|---|---|
| Digital flow or stream | Stream of digital data, produced by a source in any format organized as a frame sequence of indefinite length (virtually infinite), the frames being logically connected. |
| Information source | An electronic device capable of generating information in digital format. Typical examples for such sources are video cameras that digitize a stream of images obtained from a digital sensor based on Charge-Coupled Devices (CCD) or Complementary Metal-Oxide-Semiconductor (CMOS) technologies. Such a flow is typically represented as a sequence of images at short intervals (for example, 20 frames per second). Similarly, a microphone with an analog-to-digital converter produces an audio stream consisting of frames that represent sequences that contain the audio content of a short time interval (20 ms). |
| On-line | When referred to a flow, it underlies the ability to process the sequence even before the end is known. This is typically done for a film that, in the streaming mode, can be displayed before being fully transmitted and received by the recipient. |
| Video sensor | A hardware component capable of converting light signals (photons) into electrical signals. The current video cameras use sensors consisting of an array of sensors (pixels) which set up their physical resolution. |
| Frame (video) | Once the resolution of the sensor is defined (already in digital format), a frame is represented by a single image at the physical resolution of the sensor. |
| Frame (audio) | Once the sampling frequency of the analog-to-digital converter and other parameters such as the duration of a single frame are defined, a frame contains the output of the converter for the predetermined time interval. |
| Frame (data) | A data frame is defined as an information unit can be definable from time to time |
| Modification or manipulation of the flow | Ad any digital document, a stream can be altered with editing tools. It is possible to alter a stream in different ways by:<br>    1. Alteration of one or more frames by modifying their content by changing the numeric values contained within the frame,<br>    2. Complete deletion of one or more frames from the sequence, and<br>    3. Insertion in the sequence of one or more frame not produced by the original source or in order to alter the natural order.<br>or any mix of these. |
| Hash function | A hash function is a mathematical function capable of returning a (unique) fixed size value starting from a set of size data. The return value is defined in English as a hash value, hash code or just hash. The hash functions are also used in encryption since they allow to verify the integrity of a data set, in fact if the value of the hash function as precalculated on the set of data D is known, it is possible to recalculate the hash function on the set of data D', and if the two values coincide, then D = D'. On the other hand, it is impossible to calculate a value of a hash function without possessing the set of data on which it has been evaluated.<br>The hash functions are not reversible, i.e., once the value of the function is known, it is not possible to derive the data set that was used as input for the calculation of the function.<br>Moreover, the hash functions used for encryption also possess the property of being devoid of collisions, that is no two values in the set of input data produce the same value of the function. The main hash functions are MD5, SHA1, SHA256, SHA512.<br>Hash functions are also used as a checksum (integrity verification) or fingerprint of documents for the digital signature. |

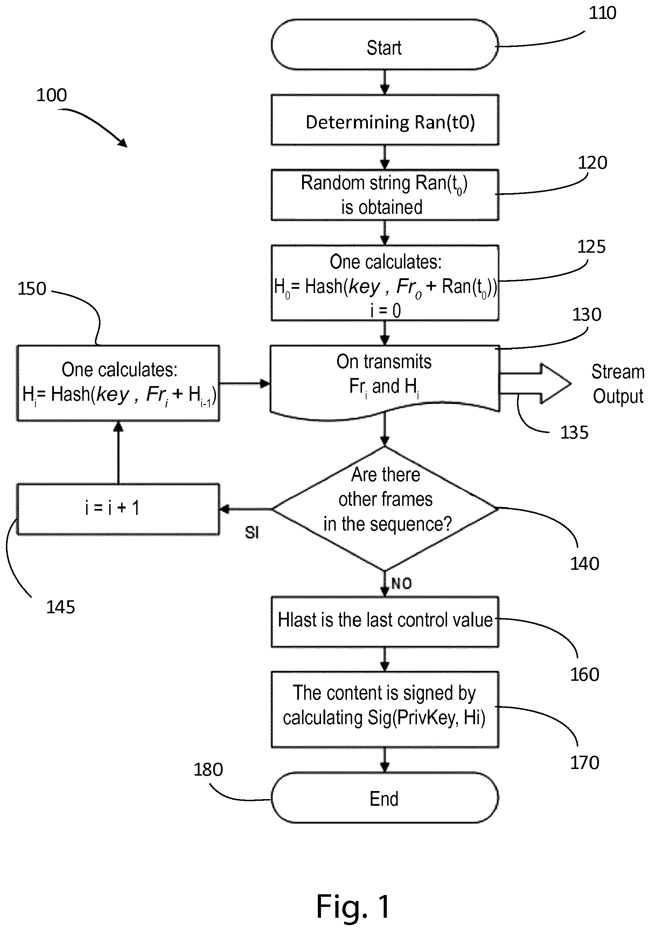

Referring now to Figure 1, the method according to the present embodiment consists of 4 steps.

The method 100 begins with the starting block 110.

In Step 0, in block 115 a random string defined Ran$(t_0)$ is determined (in a known manner). In one embodiment, this string can also be put at the head of the output stream of the method according to the invention.

At Step 1, once $t_0$ is fixed as the start instant of the sequence of frames, in the block 120 the value Ran$(t_0)$, or a random number generated or relevant to the time $t_0$ and the first frame (wherein by "frame" it is generally to be understood an information unit, for example audio or video or text) of the sequence, defined as $Fr_0$, are obtained. At this point, in block 125, the following value is calculated:

$$H_0 = \text{Hash } (Fr_0 + \text{Ran}(t_0))$$

In this step as well in the next steps, the summing operation '+' represents the physical concatenation of the data contained in the frame and the string value. By "concatenation", it is to be understood the creation of a single block of data as obtained by adding the values of the random number Ran $(t_0)$ or the value of the hash function of the previous frame, immediately after the data that constitute the frame.

At block 130, $Fr_i$ and $H_i$ are transmitted, which are inserted in the output stream at 135 (note that in this way there is a real-time encoding and transmission of the stream, what is for example useful in the recording a video).

In Step 2, if in block 140 it is noted that there are other frames in the sequence, the counter is incremented in 145 and the value of $H_1$ is calculated in 150 and so on continuing the cycle by calculating $H_i$ for all the frames $Fr_i$ subsequent to $Fr_0$ until the last frame of the $Fr_{last}$ of the sequence ($1 \leq i \leq$ last):

$$H_i = \text{Hash}(Fr_i + H_{i-1})$$

For time intervals that do not exceed a maximum interval (the intervals may be regular and pre-defined), for example every 100 frames or every 10 s, the current value of $H_i$ is digitally signed (using the RSA algorithm or other algorithm of digital signature) using the private key *PrivKey* of the sequence producer. The result of the signature process ($\text{Sig}_{privKey} (H_i)$) and the value of $H_i$ are then inserted in the output stream and added to the list of control codes associated with the specific sequence to be published on a producer website (publicly accessible through the Internet), in order for them to be able to be consulted on subsequent verification operations.

At Step 3, in block 160, the last calculated value $H_{last}$ represents the control code for verifying the integrity of the individual frames and the entire sequence from $Fr_0$ to $Fr_{last}$. It is noted that the code generated for each intermediate frame is indicative of the originality of all the previous frames.

At Step 4, in block 170, also the last control code $H_{last}$ is digitally signed (as for the other control codes generated at regular intervals). In this way, the functions of non-repudiation are activated (by the producer) and the possibility to verify the origin (the identity of the producer) of the entire sequence.

The integrity verification of a sequence produced in this way is obtained by applying the same method on the received frame sequence (removed from the $H_i$). In fact, if any $H_x$ code is calculated other than that corresponding to the frame $Fr_x$ transported by the broadcasted stream, an error will be output to indicate that the integrity has been violated.

The function Hash$(Fr_i)$ is a Hash function as indicated above, calculated on the set of data $Fr$.

It is evident that any alteration to a frame will change the value of the Hash function for that frame, and similarly, the concatenation of the values $H_i$ and $H_{i+1}$ of the control hash function will prevent any alteration in the sequence of frames. For example, if a $H_x$ is not reproduced by the verification calculation, this will mean that the $Fr_x$ frame has been altered, or that the sequence has been altered (by adding or removing at least one frame).

The test continues until the end of the stream is reached. The certainty that the encoding operation has been carried out by the actual producer of the sequence (and not intentionally recoded by a malicious user to hide any manipulations) lies in the fact that only someone who has encoded the stream according to the invention is able to produce the valid control codes (which verify the signature associated with each $H_i$) because only the producer will own the private key needed for the production of the signature. Any other value will make the signature verification fail.

By concatenating the sequence of codes, it is impossible to add or remove frames without affecting the control code that will be recalculated at the destination.

By the described method, given a sequence of frames (stream), it is possible to on-line (real-time) associate a numerical code to each frame of the sequence which is subsequently used for verifying the integrity of the flow from the first frame until the frame under consideration.

It is not mathematically possible to create false control codes, i.e. it is not possible to produce an alteration of the flow by reconstructing a fake control code that would proves the integrity.

Finally, it should be pointed out that the concept of integrity is often associated with non-repudiation, whereby once the integrity of the data stream has been demonstrated, it is possible to extend the method as mentioned above by adding the digital signature to the last frame of the movie, unequivocally tying the flow to the identity of the person who produced it, and thus making the contents of the stream as not repudiable to third parties.

Note that the stream produced by the inventive method is not immediately compatible with traditional video players or data, but the latter must contain a procedure that divides up the frames from the $H_i$ values.

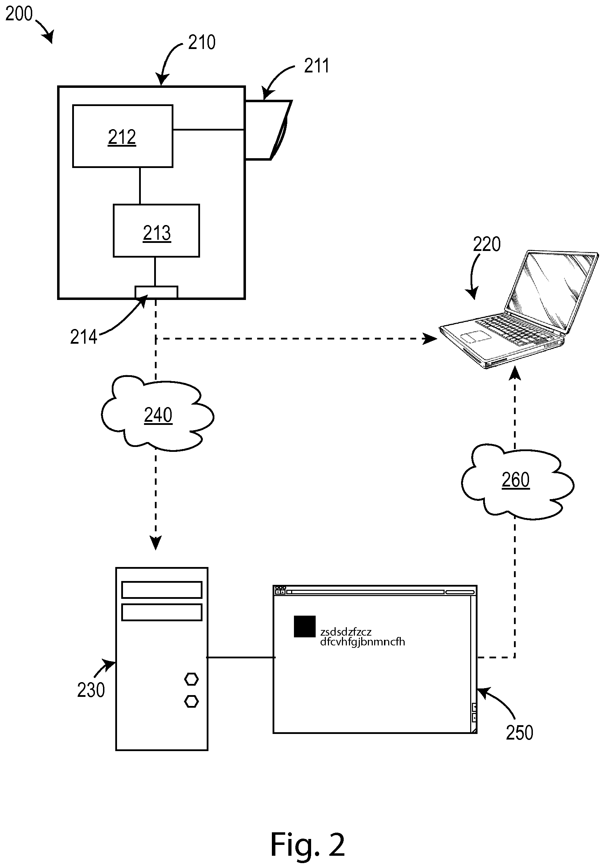

Referring now to Fig. 2, a system 200 is described that implements the method according to the invention.

It is first provided a video and/or audio recording device 210, which includes recording means 211 (e.g. an optics and/or a microphone), connected to storage means 212, which, in turn, are connected to calculation means 213 (processor and other related means) which carry out the steps of the method described above. The calculation means 213 are connected to data output means for the output to a physical device 220 or to a network 240 (e.g. the Internet). The physical device is typically a computer 220.

If the sending of certified sequence is done through the network 240, then it arrives at a remote server 230. The computer 220 accesses such a remote server 230 and downloads the data containing the entire certified sequence or only the certificates of digital signatures and/or the initial random value. The server 230 conveniently maintains a web site 250 wherefrom the computer 220 can download data through a network 260 (equal to or different from the network 240). At this point, the computer 220 can verify that the obtained sequence is authentic and has not been tampered.

A further embodiment of the invention

According to a further embodiment of the present invention the following steps are carried out:

B. calculating in 125 the hash value $H_0$:

$$H_0 = \text{Hash}(Fr_0)$$

In this case one does not use the random seed in the more general version of the method. One then move on to the following stages:

C. calculating in 150,160 the values $H_i$ for the index $I$ in the range $1 \leq i \leq$ last, in which last is a positive integer number that identifies the last frame $Fr_{last}$ of the sequence, as a concatenated hash function:

$$H_i = \text{Hash}(Fr_i + H_{i-1})$$

D. computing the digital signature of the hash values $H_i$ at time intervals limited by a maximum value (optionally the intervals are regular), at least the last of the concatenated hash values $H_i$ being in each case signed; thus, if the interval is larger than the video sequence, the last hash value is signed anyway.

At this point, one prepares the true and proper certified sequence, with the following step:

E. preparing in 130,135 a certified video and/or audio sequence associating each frame $Fr_i$ to the relevant value of concatenated hash $H_i$ or the signed concatenated hash value where present.

For the method, it is then necessary to publish some of the data, as follows:

G. publishing the digital certificates (issued by a certification authority and containing the public keys of the manufacturer) relevant to the private key used for said digital signature (which is also referred to as "control codes");
H. publishing at least one of said digitally signed concatenated hash values $H_i$, and add them to said certified sequence at the end of the relevant time intervals.

In the H step the signed values of $H_i$ are added just before the frame i+1.
In one aspect of the invention, before step B a further step is carried out:

A. determining in 115 a random string $\text{Ran}(t_0)$ and associating it to the frame $Fr_0$ at time $t_0$ in the sequence of frames;

and wherein in step B the following is calculated:

$$H_0 = \text{Hash}(Fr_0 + \text{Ran}(t_0))$$

wherein the operation "+" represents the physical concatenation of the data contained in the first frame of the sequence $Fr_0$ and the value of the random string $\text{Ran}(t_0)$, after step D and before step H the following further step being performed:

F. adding, to the head of the certified sequence, said random string $\text{Ran}(t_0)$.

The fact of calculating this random seed allows greater security of the certification, as the seed can be provided by a third entity. The fact of putting the seed at the head of the sequence is generally optional, but necessary if one wants to verify a sequence on-the-fly.

According to an aspect of the invention, in step D, the signature is applied to at least the $H_i$ values related to the frame distributed in the sequence.

According to an aspect of the invention, the steps A to G are performed in real time at the time of production of a video sequence and/or audio, producing a certified sequence in real time.

Of course, there is a corresponding method for verifying the integrity of the sequence produced by the method just described, according to the following steps:

L. providing a certified string according to the method of any one of claims 1 to 6;

M. providing the value of the random string Ran$(t_0)$ if it has been used for the creation of the certified string;

N. providing digital certificates related to the private key used in the said digital signature;

O. calculating, for each frame $Fr_i$ of the certified sequence, the value of the corresponding concatenated hash $H_i$ in the range $1 \leq i \leq$ last;

P. verifying that the values of $H_i$ as calculated in step O are identical to those provided in the certified sequence;

Q. verifying the signature of the at least one certified concatenated hash value.

The method according to the invention can be implemented through a computer program.

The methods just described and the programs may be part of an integrity certification system of a sequence of video and/or audio frames, comprising a video and/or audio signals recording device, wherein in said recording device a program is installed according to the invention that realizes the steps of the production method of the above illustrated certified sequence.

Correspondingly, there will be a system for the integrity verification of the produced certified sequence, in which the system is the one just described with the addition of a remote computer with respect to said recording device, the remote computer including means for receiving said certified sequence and the program for the verification of the sequence that realizes the steps of the sequence verification method.

Innovations with respect to the prior art

One has at least the following innovations compared to the prior art:

- For each frame, a numerical code is immediately available that allows to verify the integrity of the flow from the first frame to the current frame. In other words, at the same instant in which the current frame is generated, the control code can be calculated, ensuring in such a way the integrity not only of the current frame but of all the frames generated from the beginning of the sequence.
- The method can be integrated in the main formats (redefining the format itself or using formats that allow to insert control data) for saving the (video or audio) frame sequences by saving, with every frame, its control code, so after the saving it will be possible to locate the untouched part of the movie and the part eventually changed.

In the foregoing, preferred embodiments have been described and variants of the present invention have been suggested, but it is to be understood that those skilled in the art will be able to make modifications and changes, without so departing from the related scope of protection, as defined by the attached claims.

**Claims**

1. Method for certifying the integrity of a sequence of video and/or audio frames, wherein the following steps are executed:

B. calculating (125) the value of the hash $H_0$:

$$H_0 = \mathrm{Hash}(Fr_0)$$

C. calculating (150,160) the values $H_i$ for the index $i$ in the interval $1 \leq i \leq$ last, wherein last is a positive integer number which identifies the last frame $Fr_{last}$ of the sequence, as a interlinked hash function:

$$H_i = \mathrm{Hash}(Fr_i + H_{i-1})$$

D. calculating the digital signature of the hash values $H_i$ at time intervals up to a ceiling interval value, at least the last interlinked hash value $H_{last}$ being digitally signed;

E. preparing (130, 135) a video and/or audio certified sequence by associating to each frame $Fr_i$ the relevant interlinked hash value $H_i$ or the signed interlinked hash value when present;

G. publishing the digital certificates relevant to a private key utilized for said digital signature;

H. publishing at least one of digitally signed interlinked hash value $H_i$ issued in step E, and adding it to said certified sequence at the end of the relevant time intervals.

2. Method according to claim 1, wherein before step B the following further step is performed:

A. determining (115) a random string $\mathrm{Ran}(t_0)$ and associating it to frame $Fr_0$ at time $t_0$ in the frames sequence;

and wherein in step B the following is calculated

$$H_0 = \mathrm{Hash}(Fr_0 + \mathrm{Ran}(t_0))$$

Wherein the operation "+" represents the physical interlink of the data contained in the first frame $Fr_0$ of the sequence and the value of random string $\mathrm{Ran}(t_0)$, after step D and before step H the following further step being executed:

F. adding at the beginning of the certified sequence said random string $\mathrm{Ran}(t_0)$.

3. Method according to claim 1 or 2, wherein in step D the signature is calculated at least for values $H_i$ relevant to frames distributed in the sequence.

4. Method according to claim 3, wherein the $H_i$ values are relevant to frames falling at regular intervals in the frames sequence.

5. Method according to claim 1 to 4, wherein steps A to G are performed in real time when a video and/or audio is produced, producing a certified sequence in real time.

6. Method for verifying the integrity of a sequence of video and/or audio frames, wherein the following steps are executed:

L. providing a certified string according to the method of any claim 1 to 5;

M. providing the value of the random string $\mathrm{Ran}(t_0)$ if it has been utilized for the creation of the certified string;

N. providing the digital certificates relevant to a private key utilized in said digital signature;

O. calculating for each frame $Fr_i$ of the certified sequence the value of the corresponding interlinked hash $H_i$ in the interval $1 \le i \le last$;

P. verifying that the values $H_i$ calculated in step O are identical to those provided in the certified sequence;

Q. verifying the signature of said at least a certified interlinked hash.

7. Computer program, comprising code means configured in such a way that, when executed by a computer, realize the steps of the method according to any claim 1 to 5 or according to claim 6.

8. System for certifying the integrity of video and/or audio frames sequence, comprising a video and/or audio recording device, wherein on said recording device the program according to claim 7 is installed, which realizes the steps of any claim 1 to 5.

9. System according to claim 8, further comprising a computer which is remote with respect to said recording device, the remote computer including means for receiving said certified sequence and the program according to claim 8 which realizes the steps of the method according to claim 6.

```
                                        ┌─────────────────────┐  110
                                        │       Start         │
                                        └─────────────────────┘
                                                  │
                                        ┌─────────────────────┐
  100                                   │ Determining Ran(t0) │
                                        └─────────────────────┘
                                                  │
                                        ┌─────────────────────┐  120
                                        │ Random string Ran(t₀)│
                                        │     is obtained     │
                                        └─────────────────────┘
```

**Start** — 110

**Determining Ran(t0)**

**Random string $Ran(t_0)$ is obtained** — 120

**One calculates:** $H_0 = Hash(key, Fr_0 + Ran(t_0))$ $i = 0$ — 125

150 — **One calculates:** $H_i = Hash(key, Fr_i + H_{i-1})$

**On transmits $Fr_i$ and $H_i$** — 130

**Stream Output** — 135

$i = i + 1$ — 145

**Are there other frames in the sequence?** — 140

SI / NO

**Hlast is the last control value** — 160

**The content is signed by calculating Sig(PrivKey, Hi)** — 170

**End** — 180

Fig. 1

Fig. 2

Europäisches
Patentamt

European
Patent Office

Office européen
des brevets

## EUROPEAN SEARCH REPORT

Application Number

EP 17 16 6445

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2010/146287 A1 (KREINER BARRETT [US] ET AL) 10 June 2010 (2010-06-10) * paragraphs [0035] - [0046]; figure 4 * | 1-9 | INV. H04N21/647 H04L9/32 H04N21/835 |
| A | "INFORMATION TECHNOLOGY - SECURITY TECHNIQUES - MESSAGE AUTHENTICATION CODES (MACS) - PART 1: MECHANISMS USING A BLOCK CIPHER//TECHNOLOGIES DE L'INFORMATION - TECHNIQUES DE SECURITE - CODES D'AUTHENTIFICATION DE MESSAGE (MACS) - PARTIE 1: MECANISMES UTILI", INTERNATIONAL STANDARD ISO, XX, XX, vol. 9797-01, 1 January 1999 (1999-01-01), XP008033366, * pages 4, 21 * * page 24 * | 1-9 | |
| A | "Overview of hash functions ED - Walter Didimo; Maurizio Patrignani", 15 December 1999 (1999-12-15), NETWORK AND PARALLEL COMPUTING; [LECTURE NOTES IN COMPUTER SCIENCE; LECT.NOTES COMPUTER], SPRINGER INTERNATIONAL PUBLISHING, CHAM, PAGE(S) 18 - 47, XP047288842, ISSN: 0302-9743 ISBN: 978-3-540-76785-5 [retrieved on 2005-05-30] * pages 25,36 * | 1-9 | |

TECHNICAL FIELDS
SEARCHED        (IPC)

H04N
H04L

-/--

The present search report has been drawn up for all claims

| Place of search | Date of completion of the search | Examiner |
|---|---|---|
| Munich | 3 August 2017 | Folea, Octavian |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

Europäisches
Patentamt

European
Patent Office

Office européen
des brevets

**EUROPEAN SEARCH REPORT**

Application Number

EP 17 16 6445

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | MENEZES A ET AL: "OTHER HASH FUNCTION PROPERTIES AND APPLICATIONS, KEYED HASH FUNCTIONS (MACS), DATA INTEGRITY AND MESSAGE AUTHENTICATION, CLASSIFICATION AND FRAMEWORK", 1 January 1997 (1997-01-01), HANDBOOK OF APPLIED CRYPTOGRAPHY; [CRC PRESS SERIES ON DISCRETE MATHEMATICES AND ITS APPLICATIONS], CRC PRESS, BOCA RATON, FL, US, PAGE(S) 330-331,352, XP002525679, ISBN: 978-0-8493-8523-0 * page 353 * ----- | 1-9 | |
| | | | TECHNICAL FIELDS SEARCHED (IPC) |

The present search report has been drawn up for all claims

| Place of search | Date of completion of the search | Examiner |
|---|---|---|
| Munich | 3 August 2017 | Folea, Octavian |

EPO FORM 1503 03.82 (P04C01)

## ANNEX TO THE EUROPEAN SEARCH REPORT
## ON EUROPEAN PATENT APPLICATION NO.

EP 17 16 6445

This annex lists the patent family members relating to the patent documents cited in the above-mentioned European search report.
The members are as contained in the European Patent Office EDP file on
The European Patent Office is in no way liable for these particulars which are merely given for the purpose of information.

03-08-2017

| Patent document cited in search report | Publication date | Patent family member(s) | Publication date |
|---|---|---|---|
| US 2010146287 A1 | 10-06-2010 | NONE | |

EPO FORM P0459

For more details about this annex : see Official Journal of the European Patent Office, No. 12/82